(19)

Europäisches
Patentamt
European
Patent Office
Office européen
des brevets

(11) **EP 2 383 992 B1**

(12) **EUROPEAN PATENT SPECIFICATION**

(45) Date of publication and mention
of the grant of the patent:
**29.11.2017 Bulletin 2017/48**

(51) Int Cl.:
***H04N 7/01*** *(2006.01)*

(21) Application number: **11163706.2**

(22) Date of filing: **26.04.2011**

(54) **Method and apparatus for the detection and classification of occlusion regions**

Verfahren und Vorrichtung zur Detektion und Klassifizierung von Okklusionsbereichen

Procédé et appareil pour la détection et la classification des régions d'occlusion

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2010 TR 201003470**

(43) Date of publication of application:
**02.11.2011 Bulletin 2011/44**

(73) Proprietor: **Vestel Elektronik Sanayi ve Ticaret A.S.
45030 Manisa (TR)**

(72) Inventors:
• **Gunyel, Bertan**
**45030, Manisa (TR)**
• **Alatan, Abdullah Aydin**
**06800 Ankara (TR)**

(74) Representative: **Cayli, Hülya
Paragon Consultancy Incorporated
Koza Sokak No: 63/2
GOP 06540 Ankara (TR)**

(56) References cited:
**WO-A1-92/05662     WO-A1-2005/022922**

• **BELLERS E B ET AL: "Solving occlusion in
Frame-Rate up-Conversion", CONSUMER
ELECTRONICS, 2007. ICCE 2007. DIGEST OF
TECHNICAL PAPERS. INT ERNATIONAL
CONFERENCE ON, IEEE, PI, 10 January 2007
(2007-01-10), pages 1-2, XP031071570, DOI:
10.1109/ICCE.2007.341494 ISBN:
978-1-4244-0762-0**
• **MERTENS M J W ET AL: "MOTION VECTOR FIELD
IMPROVEMENT FOR PICTURE RATE
CONVERSION WITH REDUCED HALO",
PROCEEDINGS OF SPIE, SPIE, US, vol. 4310, 29
December 2000 (2000-12-29), pages 352-362,
XP008025129, ISSN: 0277-786X, DOI:
10.1117/12.411812 ISBN: 978-0-8194-2198-2**
• **ZHANG YI-XIONG ET AL: "Frame rate
up-conversion using multiresolution critical
point filters with occlusion refinement",
JOURNAL OF ZHEJIANG UNIVERSITY SCIENCE
A, ZHEIJIANG UNIVERSITY PRESS, CN, vol. 9, no.
12, 1 December 2008 (2008-12-01), pages
1621-1630, XP036053163, ISSN: 1673-565X, DOI:
10.1631/JZUS.A0820200 [retrieved on
2008-12-01]**

## Description

### Technical Field

The present invention relates to a method and apparatus for the detection and classification of occlusion regions.

### Prior Art

A video is made up of plural frames, each frame being a still image, the effect of showing consecutive frames being to give the impression of movement. The frame rate of videos is generally sufficiently high such that a viewer cannot perceive the individual frames but rather perceives a continuous moving image.

On some television displays, it is desirable to increase the frame rate of displayed video from its original frame rate. This can be due to higher frame rate requirement for display in accordance with a different standard from that at which the video was captured.

In addition, many of the latest high-performance television sets, particularly large screen and wide screen (16:9 format) versions, use a 100Hz screen refresh rate instead of the conventional 50Hz refresh rate. This is primarily to avoid screen flicker and motion blur, which becomes more perceptible and annoying to the viewer as the screen size increases. However, standard television broadcast transmissions only contain 50 frames per second. Hence, the frame rate of the transmitted content should be adjusted for, for example, the new LCD televisions which have refresh rates of 100Hz, 120Hz or 200Hz.

The increase in the frame rate is called frame rate up conversion. For frame rate up conversion, new frames are inserted between existing frames of the video content. Three straightforward approaches for frame rate up conversion are referred to as "black frame insertion", "frame repetition" and "frame averaging". Whilst these techniques are computationally relatively simple, they can degrade visual performance. For example, black frame insertion reduces the average intensity of the video content, whereas frame repetition and frame averaging cause "motion judder" and "motion blur". Motion compensated frame interpolation is the preferred solution for interpolation to avoid the motion blur, which is caused by the motion persisting function of the human visual system, the long response time of the crystal cells and the hold-type characteristic of panel displays.

However, with motion compensated frame rate up conversion, halo effects, observed as "ghost replicas" in occlusion regions around the boundaries of moving objects, arise. Several approaches have been attempted to cope with the halo problem. Since the luminance information in occlusion regions is available only in one of two consecutive frames, it has been suggested that more than two frames be used both in motion estimation and in motion compensation.

However, it is often necessary to limit the number of frames to two. In that circumstance an occlusion handling algorithm is used as described in US 6219436. The method proposed in this US patent specification makes use of the fact that forward and backward matching errors cannot be simultaneously small in occlusion regions due to lack of corresponding intensity information in consecutive frames. Hence, the occlusion regions are detected according to the ratio between forward and backward matching errors and cover/uncover classification is performed according to the relative magnitudes of these errors.

US 6487313 patent application proposes an occlusion detector and classifier algorithm which detects occlusion regions according to sharp changes in the motion vector field. The classification of the occlusion regions is performed according to relative positions of corresponding vectors in space with respect to each other.

WO-A-97/04599 patent application detects occluded regions based on the idea that the vector trajectories of non-occluded blocks should be similar in consecutive motion fields. Discontinuity of trajectories is used to label occlusion blocks.

The paper ZHANG YI-XIONG ET AL: "Frame rate up-conversion using multiresolution critical point filters with occlusion refinement" discloses a frame rate up-conversion method. In this document, multiresolution critical-point filters are used for frame rate up-conversion operation. Said document discloses two different ways to perform the interpolation, namely spatial prediction mode and temporal prediction mode. Said spatial prediction mode is applied only if similarity of the neighboring pixels is higher than a threshold. If different types of blocks appear in a neighborhood, similarity of the pixels would be less and temporal prediction mode should be performed. Therefore, said method requires relatively high computational power for processing different type of neighboring blocks.

These techniques have not been found to be as robust and reliable as is required in practice.

### Brief Description of the Invention

Present invention provides a method for frame interpolation as recited in the appended claims. Examples of the method enable occlusion regions to be detected. In an example to find inconsistencies between a bidirectional motion vector and either a forward or a backward motion vector, the sum of the absolute differences of the motion vector components between the bidirectional motion vector and either a forward or a backward motion vector is compared with a predetermined threshold.

The method preferably further comprises investigating a plurality of regions of the interpolated frame and identifying regions at which inconsistencies are found as occlusion regions, and other regions where there are no inconsistencies as non-occluded regions. In another example, the method further comprises classifying the occlusion regions located as covered, or uncovered.

The identification of the regions of the interpolated frame, and the classification of the located occlusion regions, enables different interpolation strategies to be employed for each type of region identified. Generally, non-occluded regions will be interpolated from both first and second frames. The information to interpolate an uncovered region will be taken from the next, second frame, whilst the information to interpolate a covered region will be taken from the previous, first frame.

Preferably, to classify the located occlusion regions the weighted sum of the differences of x and y components of the motion vector of a pixel, or a block of pixels, is compared with a predetermined classification threshold.

Preferably, a plurality of decision steps is included in the calculation of the weighted sum of the vector component differences. To provide for good classification performance without adding unnecessary computational complexity, four decision steps might be included.

Once the occlusion regions have been detected and classified, they can be interpolated. Preferably the occlusion regions are interpolated according to their classification.

The frame interpolation method may use any of the detection and/or classification techniques defined above. Similarly, the defined detection and classification methods may be combined with any of the following interpolation methods. Alternatively, any of the individual techniques described may be used alone.

In an example methods as defined above may comprise interpolating regions identified as non-occluded utilizing information from both of the first and second frames;

- interpolating occlusion regions classified as covered by utilizing information from the previous, first frame; and
- interpolating occlusion regions classified as uncovered, by utilizing information from the next, second frame.

The information used for the interpolation may be pixel information, for example, the intensity values of individual pixels and/or blocks of pixels.

In an example, the interpolation or compensation of a non-occluded region in the interpolated frame comprises making a weighted summation of corresponding pixels in the first frame and the second frame.

A corresponding pixel in the first frame may be found at a spatial position which is determined by the location of the non-occluded region in the interpolated frame using the corresponding bidirectional motion vector. Similarly, the corresponding pixel in the second frame may be found at a spatial position which is determined by the location of the non-occluded region in the interpolated frame using the corresponding bidirectional motion vector.

Preferably, the coefficients for the weighted summation of the corresponding pixels from the first frame and the second frame are calculated according to the ratio of the temporal position of the interpolated frame to the time between the first and second frames less the temporal position of the interpolated frame.

In an example, the covered and uncovered occlusion regions are interpolated using the weighted summation of unidirectional motion compensated responses of neighboring vectors. For example, the unidirectional motion compensated responses of neighboring vectors are taken from the first or the second frame as appropriate, at a spatial position which is determined by the position in the interpolated frame, the corresponding bidirectional motion vector of the corresponding neighboring location and the above defined temporal ratio.

Preferably, the weights utilized in the weighted summation should be normalized to give a sum of weights equal to 1.

Preferably, the method further comprises applying de-blocking filtering between neighboring blocks of pixels.

Object of the Invention

The object of the present invention is to provide a method for occlusion detection that is to be used to process an interpolated frame in a video sequence.

Another object of present invention is to classify occlusions and process an interpolated frame in accordance with the said classification.

Another object of the present invention is to propose a method wherein de-blocking filtering between neighboring blocks of pixels of an interpolated frame is employed in order to prevent blocking artifacts.

## Brief Description of the Drawings

**Figure 1** shows forward, backward and bidirectional motion vector fields.

**Figure 2** shows the interpolation strategy to be applied to occluded and non-occluded regions.

**Figure 3** shows a candidate vector selection for block matching.

**Figure 4** shows a de-blocking filter structure for a vertical edge between two 4x4 blocks.

**Figure 5** shows a de-blocking filter structure for a horizontal edge between two 4x4 blocks.

**Figure 6** shows one dimensional kernel positions for the filtering of a first row around a vertical edge.

**Figure 7** shows the one dimensional kernel positions for the filtering of a first column around a horizontal edge.

**Figure 8** shows an apparatus for frame interpolation.

**Figure 9** shows a block diagram of an occlusion detector for an apparatus as shown in Figure 8.

**Figure 10** shows a block diagram of an occlusion classification unit for use in an apparatus as shown in Figure 8.

**Figure 11** shows a block diagram of a frame interpolation unit as used in an apparatus as shown in Figure 8.

**Figure 12** shows a block diagram of an adaptive de-blocking filtering unit for use in an apparatus as shown in Figure8.

The reference numbers and abbreviations as used in figures may possess the following meanings;

| | |
|---|---|
| Foreground object | (110) |
| A first original frame | (100) |
| A second original frame | (104) |
| An interpolated frame | (102) |
| Occlusion region | (106, 108) |
| Pixels or blocks of pixels having bidirectional motion vector | (112, 114, 116, 118) |
| Backward motion vector | (120, 124, 128, 132) |
| Forward motion vector | (122, 126, 130, 134) |
| Pixel information for uncovered region | (220, 224) |
| Pixel information for covered region | (230, 234) |
| Pixel (or block of pixels) to be compensated | (300) |
| Neighboring pixels (or blocks of pixels) to a pixel to be compensated | (301 - 309) |
| A first block of pixels to be deblocked for a vertical edge | (401 - 416) |
| A second block of pixels to be deblocked for a vertical edge | (421 - 436) |
| Boundary between the blocks of pixels to be deblocked for a vertical edge | (400) |
| Effected pixels by deblocking for a vertical edge | (403, 404, 407, 408, 411, 412, 415, 416, 421, 422, 425, 426, 429, 430, 433 and 434) |
| A first block of pixels to be deblocked for a horizontal edge | (501, 502, 503, 504, 505, 506, 507, 508, 509, 510, 511, 512, 513, 514, 515 and 516) |
| A second block of pixels to be deblocked for a horizontal edge | (521, 522, 523, 524, 525, 526, 527, 528, 529, 530, 531, 532, 533, 534, 535 and 536) |
| Effected pixels by deblocking for a horizontal edge | (509, 510, 511, 512, 513, 514, 515, 516, 521, 522, 523, 524, 525, 526, 527 and 528) |
| Forward Motion Estimation Unit | MEFwd |
| Bidirectional Motion Estimation Unit | MEBid |
| Backward Motion Estimation Unit | MEBwd |

## Detailed Description of the Invention

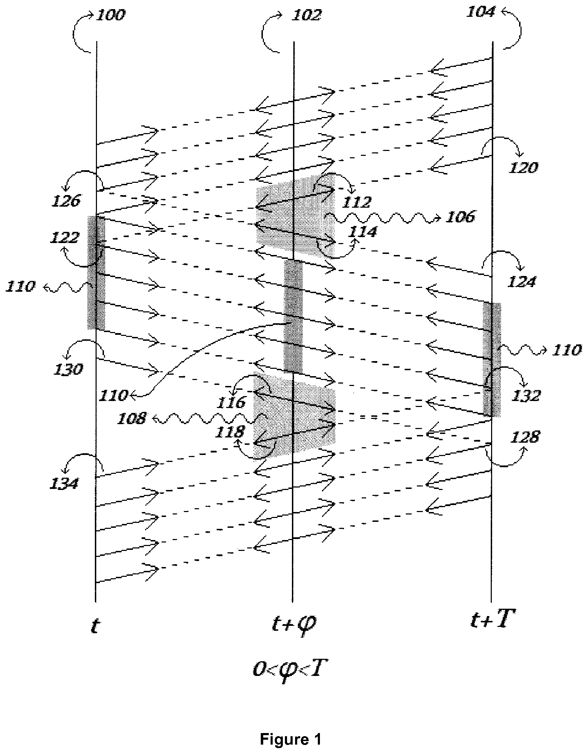

Examples of present invention are to be utilized in methods for frame interpolation for a sequence of video frames. Thus, it is required to add interpolated frames to the sequence, each interpolated frame being located temporally between a first frame and a second frame of the sequence. Embodiments of the invention use forward, bidirectional and backward motion vectors estimated for each of the first, interpolated, and second frames in a sequence as shown in Figure 1.

The manner in which the motion vectors are determined or estimated is not significant. Furthermore, any appropriate motion estimation unit may be utilized. The estimated motion vector fields used are intended to provide the 2-dimensional projection of the real 3-dimensional motion within the scene.

Figure 1 schematically shows the movements of a foreground object (110) and the movement of the background together with the corresponding motion vector fields in a hypothetical scene. A first original frame, $F(t)$, is labeled (100), and a second original frame, $F(t+T)$, is labeled (104). A new frame (102) is to be interpolated at the temporal position $(t+\varphi)$, where $0 < \varphi < T$. The foreground object (110), is moving in a downward direction with a velocity of $\overrightarrow{D}_{fg}$, whereas the background moves upwards with the velocity $\overrightarrow{D}_{bg}$. The regions (106) and (108) are occlusion regions. An occlusion region is an area of an image which is visible in a sequence of frames but which is not visible in either the first frame or the second frame. The arrows originating from the first frame (100) are the forward motion vectors which are estimated by finding a match in the second frame (104) for every pixel or block of pixels defined on first frame (100). Likewise, the arrows having their origins on second frame (104) represent the backward motion vectors which are calculated by matching pixels or blocks of pixels on first frame (100) for every pixel or block of pixels defined on second frame (104). Bidirectional motion vectors are estimated by finding one match on each of original frames (100) and (104) which are located on the same spatio-temporal line with the particular pixel or block of pixels on the interpolated frame (102). These bidirectional motion vectors are represented by the two sided arrows located on the interpolated frame (102).

It can be seen in Figure 1 that the bidirectional vectors, except for the ones located in the occlusion regions, are consistent with the corresponding forward and backward motion vectors, which are located at positions pointed by the particular bidirectional motion vector. The bidirectional motion vector of pixels or blocks of pixels (112), which is located in the occlusion region (106), is inconsistent with at least one of the corresponding backward and forward motion vectors, (120) and (122). Similarly, the bidirectional motion vector of pixels or blocks of pixels (114) which is also in occlusion region (106) is not similar to at least one of the corresponding backward and forward motion vectors (124) and (126). In the occlusion region (108), the bidirectional motion vector of pixels or blocks of pixels (116) is not consistent with at least one of the vectors (128) and (130), whereas bidirectional motion vector of pixels or blocks of pixels (118) is dissimilar to at least one of vectors (132) and (134).

Accordingly, denoting the particular bidirectional motion vector $\overrightarrow{D}_{bid}\left(\vec{x}, t+\varphi\right)$ at the spatial position $\vec{x}$, simply as $\vec{D}_{bid}$, occlusion regions can be detected as set out in relation (1).

$$\vec{x} \in R_{occlusion} \text{ if } \begin{cases} Diff\left(\overrightarrow{D}_{bid}, \overrightarrow{D}_{forward}\left(\vec{x}-\lambda\cdot\left(\frac{\varphi}{T}\right)\cdot\overrightarrow{D}_{bid}, t\right)\right) \geq thr_{occ} \\ OR \\ Diff\left(\overrightarrow{D}_{bid}, \overrightarrow{D}_{backward}\left(\vec{x}+\lambda\cdot\left(1-\frac{\varphi}{T}\right)\cdot\overrightarrow{D}_{bid}, t+T\right)\right) \geq thr_{occ} \end{cases} \quad (1)$$

In the relation (1), $R_{occlusion}$ is the set of occlusion regions in the interpolated frame and $thr_{occ}$ is a predetermined threshold. The parameter $\lambda$ is a scaling factor for enhancing the robustness of the detection algorithm. The function $Diff(.)$ is defined in equation (2), where $D^x$ and $D^y$ denote the $x$ and $y$ components of the vectors, respectively.

$$Diff\left(\overrightarrow{D}_1, \overrightarrow{D}_2\right) = \left|D_1^x - D_2^x\right| + \left|D_1^y - D_2^y\right| \quad (2)$$

Thus, and as set out in relation (1) and equation (2), a bidirectional motion vector is compared with the forward and backward motion vectors, and an inconsistency is found if the difference exceeds a predetermined threshold. As shown in equation (2), it is the sum of the absolute differences of the motion vector components of the vectors which are compared.

When an occlusion region is located, it is classified. It is necessary to determine whether any detected occlusion region is covered, as occlusion region (108) in Figure 1, or is uncovered, as occlusion region (106) in Figure 1. The detection and classification determines how occluded and non-occluded regions are rendered, or interpolated, in the interpolated frame (102). Generally, the necessary information for the interpolated frame (102) is taken from the next, or second, frame (104) if the occlusion region is uncovered, as in occlusion region (106). The information is taken from the previous, or first, frame (100), if the occlusion region is covered, as in occlusion region (108).

Regions which are not identified as occlusion regions, that is, regions where there is no inconsistency between a bidirectional motion vector and corresponding forward and backward motion vectors, are identified as non-occluded regions. For such non-occluded regions the necessary information for the interpolated frame (102) is taken from both of the first and second frames.

When a detected occlusion region can not be classified accurately, it can be left as an unclassified or undecided occlusion region. For these regions, information for the interpolated frame may be performed bidirectional, that is, can be taken from both of the first and second frames.

For the occlusion classification algorithm, the origin of the image plane is assumed to be the top left corner of the image frame. Hence, the positive $x$ and $y$ directions point from left to right and from top to bottom, respectively.

The classification method analyses x and y components of the vector pairs located at different positions in the neighborhood of the particular pixel or block of pixels in the interpolated frame $F(t+\varphi)$, (102). The classification is based on the weighted sum of the vector component differences.

Denoting $x$ and $y$ components of the motion vector of a pixel or block of pixels with $D_x(x,y)$ and $D_y(x,y)$, where $(x,y)$ represents the coordinates of the particular pixel or indices of the particular block, the weighted sum of the vector component differences, $\psi_{x,y}$, is defined as in equation (3).

$$\psi_{x,y} = \sum_{i=0}^{N-1} \gamma_i \left[ c_x D_x^{diff}(x,y) + c_y D_y^{diff}(x,y) \right] \tag{3}$$

$$D_x^{diff}(x,y) = D_x(x-d_i,y) - D_x(x+d_i,y) \tag{4}$$

$$D_y^{diff}(x,y) = D_y(x,y-d_i) - D_y(x,y+d_i) \tag{5}$$

The parameter, $d_i$, controlling the vector pairs used in the analysis should be different for each of the $N$ decision steps. The coefficient $\gamma_i$ determines the dominancy of each vector pair in the classification.

In an environment, where the horizontal component of motion is more dominant than the vertical component, the $x$ component differences of the vector pairs are more informative than the $y$ component differences. Likewise, the $y$ component differences are more valuable in an environment where the vertical motion is more dominant than the horizontal motion. Hence, the coefficients $c_x$ and $c_y$ should be calculated accordingly.

$$c_x = \frac{\left| D_x(x,y) \right|}{\left| D_x(x,y) \right| + \left| D_y(x,y) \right|} \tag{6}$$

$$c_y = \frac{\left| D_y(x,y) \right|}{\left| D_x(x,y) \right| + \left| D_y(x,y) \right|} \tag{7}$$

Preferably, the number of decision steps, $N$, is set to be 4 which is an optimal choice between the computational complexity and the classification performance. Accordingly, the parameters $d_i$ and $\gamma_i$ are formulized as in equations (8) and (9).

$$d_i = 1 + 2i, \quad i = 0,1,2,3 \tag{8}$$

$$\gamma_i = \frac{1+2i}{\sum\limits_{i=0}^{3}\left(1+2i\right)}, \quad i = 0,1,2,3 \qquad (9)$$

After the weighted sum of vector component differences, $\psi_{x,y}$, has been calculated, it is compared with a positive classification threshold in order to make the classification.

$$\left(x,y\right) \in \begin{cases} Uncover, & \psi_{x,y} < -thr_{classification} \\ Cover, & \psi_{x,y} > thr_{classification} \\ Undecided, & otherwise \end{cases} \qquad (10)$$

As set out in relation (10), different interpolation strategies will be used for regions categorized differently.

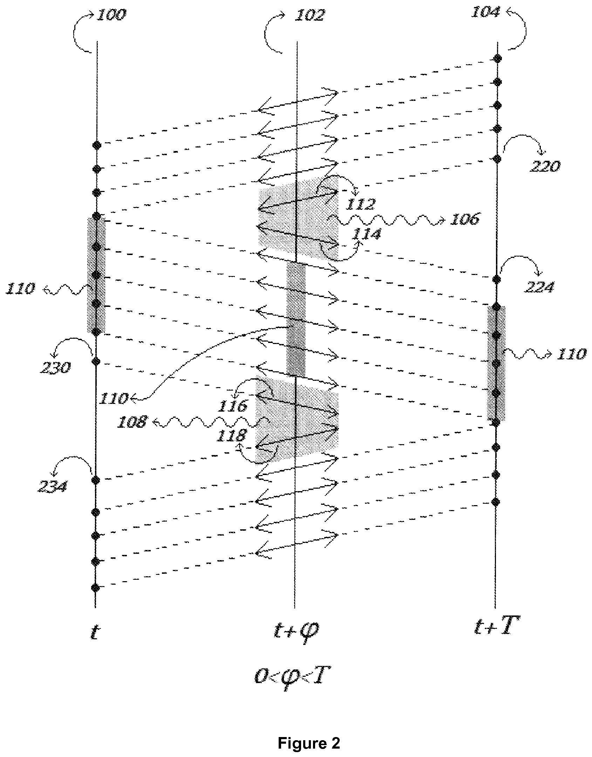

Figure 2 schematically illustrates the interpolation strategy to be applied to covered, uncovered and non-occluded regions. The non-occluded regions of the interpolated frame $F(t+\varphi)$ are compensated by using bidirectional pixel averaging, since the corresponding intensity information is present in both frames $F(t)$ and $F(t+T)$. The occlusion regions need to be interpolated with a unidirectional scheme as the corresponding intensity information is only present in one of $F(t)$ or $F(t+T)$. The correct pixel information for the uncovered region (106) is obtained from the next, or second frame (104) $F(t+T)$. Hence, the pixels or blocks of pixels having bidirectional motion vectors (112) and (114) of the uncovered region (106) are compensated unidirectionally by using the pixel information labeled (220) and (224), respectively. The correct intensity information for the covered region (108) is taken from the previous, or first frame (100), $F(t)$. The pixels or blocks of pixels having bidirectional motion vector (116) and (118) of the covered region (108) are compensated by the pixel information (230) and (234) of frame (100), respectively.

Since the bidirectional block matching might not yield correct motion vectors in covered and uncovered regions, the unidirectional interpolation from the correct frame might still create visual artifacts. This can be observed from the motion vectors of the covered and uncovered regions (106), (108) in Figure 2. The pixels or blocks of pixels having the bidirectional motion vectors (112) and (114) and which are spatially adjacent, are interpolated by using pixel information (220) and (224) which are spatially unrelated. This can cause inconsistency in the visual performance. Similar artifacts may be observed in the compensation of the adjacent pixels or blocks of pixels having bidirectional motion vector (116) and (118) by information from the non-adjacent pixel information (230) and (234). In order to suppress such artifacts, a weighted compensation is utilized for the occlusion regions.

The unidirectional responses of a bidirectional motion vector $\vec{D}_{bid}$ for a pixel located at $\vec{X} = \left(x, y\right)$ are illustrated in equations (11) and (12) for covered and uncovered regions, respectively.

$$R_{cover}\left(\vec{X}, \vec{D}_{bid}, t+\varphi\right) = F\left(\vec{X} - \left(\frac{\varphi}{T}\right) \cdot \vec{D}_{bid}, t\right) \qquad (11)$$

$$R_{uncover}\left(\vec{X}, \vec{D}_{bid}, t+\varphi\right) = F\left(\vec{X} + \left(1 - \frac{\varphi}{T}\right) \cdot \vec{D}_{bid}, t+T\right) \qquad (12)$$

The weighted compensation result is obtained by the weighted summation of the compensation responses of a number of candidate vectors.

$$I_{cover}\left(\vec{X}, t+\varphi\right) = \frac{\sum\limits_{i=0}^{N-1} w_i \cdot R_{cover}\left(\vec{X}, \vec{D}_i, t+\varphi\right)}{\sum\limits_{i=0}^{N-1} w_i} \qquad (13)$$

$$I_{uncover}\left(\overrightarrow{X},t+\varphi\right)=\frac{\sum_{i=0}^{N-1}w_i\cdot R_{uncover}\left(\overrightarrow{X},\overrightarrow{D}_i,t+\varphi\right)}{\sum_{i=0}^{N-1}w_i} \qquad (14)$$

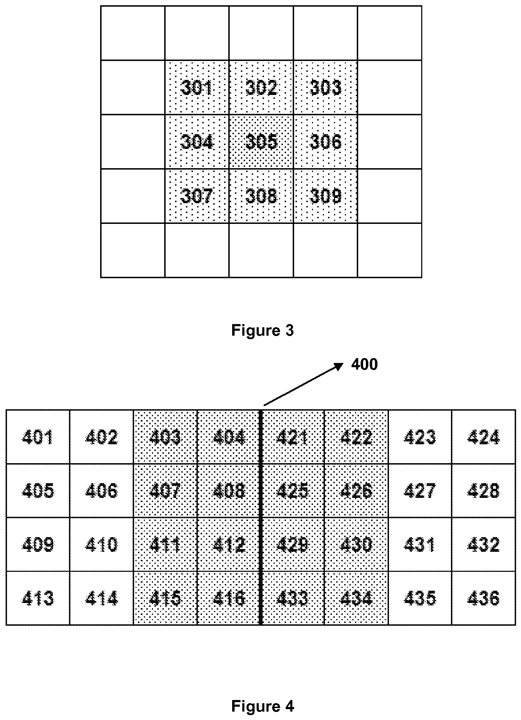

Figure 3 illustrates an example of candidate vector selection in which the number of candidate vectors N is 9. The pixel (or block of pixels) (300) is compensated by using the vectors of the neighboring pixels (or blocks of pixels) (301, 302, 303, 304, 305, 306, 307 and 308).

Denoting the particular bidirectional motion vector $\overrightarrow{D}_{bid}\left(\vec{x},t+\varphi\right)$ at the spatial position $\vec{x}$, simply as $\overrightarrow{D}_{bid}$ the bidirectional compensation response is as defined in equation (15).

$$I_{bid}\left(\overrightarrow{X},t+\varphi\right)=\left(1-\frac{\varphi}{T}\right)\cdot F\left(\overrightarrow{X}-\left(\frac{\varphi}{T}\right)\cdot\overrightarrow{D}_{bid},t\right)+$$
$$\left(\frac{\varphi}{T}\right)\cdot F\left(\overrightarrow{X}+\left(1-\frac{\varphi}{T}\right)\cdot\overrightarrow{D}_{bid},t+T\right) \qquad (15)$$

The overall compensation strategy is illustrated in relation (16).

$$F\left(\overrightarrow{X},t+\varphi\right)=\begin{cases}I_{bid}\left(\overrightarrow{X},t+\varphi\right),\overrightarrow{X}\in R_{non-occluded}\\I_{cover}\left(\overrightarrow{X},t+\varphi\right),\overrightarrow{X}\in R_{cover}\\I_{uncover}\left(\overrightarrow{X},t+\varphi\right),\overrightarrow{X}\in R_{uncover}\end{cases} \qquad (16)$$

In relation (16), $R_{non-occluded}$, $R_{cover}$, $R_{uncover}$ denote the set of pixels (or blocks of pixels), which are labeled as non-occluded, covered and uncovered, respectively.

As defined in relation (16), and as described above, the covered, uncovered and non-occluded pixels (or blocks of pixels) are compensated differently. For block-wise implementations, if some or all of these types appear in a neighborhood, apparent visual blocking artifacts can be observed.

In order to reduce the blocking artifacts in block-wise implementations, de-blocking filtering can be used and operated on the adaptive interpolation output. The filtering is applied along the block edge between two neighboring blocks, if

- one of the blocks is occluded and the other is non-occluded or,
- both of the blocks are occluded with different types of occlusion (cover or uncover).

Figure 4 schematically illustrates the de-blocking filter structure for a vertical edge between two 4x4 blocks. The pixels (401, 402, 403, 404, 405, 406, 407, 408, 409, 410, 411, 412, 413, 414, 415 and 416) constitute the first block of pixels which is subject to de-blocking filtering, whereas the second block is formed of pixels (421, 422, 423, 424, 425, 426, 427, 428, 429, 430, 431, 432, 433, 434, 435 and 436). The boundary between the two blocks of pixels is labeled (400). The de-blocking filtering is effective over the pixels (403, 404, 407, 408, 411, 412, 415, 416, 421, 422, 425, 426, 429, 430, 433 and 434).

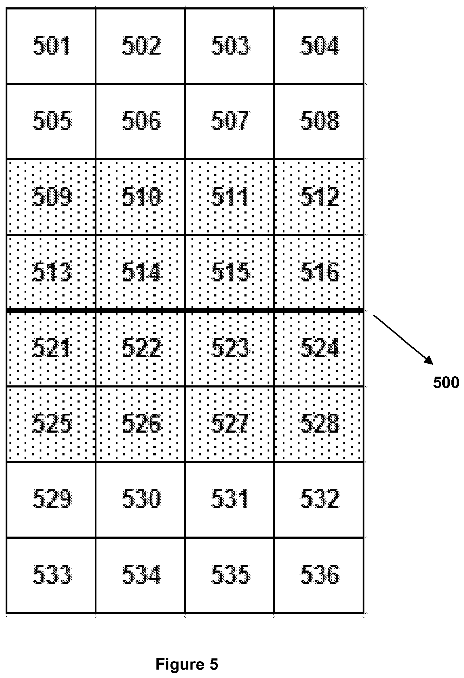

The de-blocking filter structure for a horizontal edge between two 4x4 blocks is shown in Figure 5, where the first block includes the pixels (501, 502, 503, 504, 505, 506, 507, 508, 509, 510, 511, 512, 513, 514, 515 and 516), whereas the second block is formed of pixels (521, 522, 523, 524, 525, 526, 527, 528, 529, 530, 531, 532, 533, 534, 535 and 536). The boundary between the two blocks is labeled (500). The de-blocking filtering is effective on pixels (509, 510, 511, 512, 513, 514, 515, 516, 521, 522, 523, 524, 525, 526, 527 and 528).

The filtering is performed with a one dimensional kernel having a length of (BlockWidth+1) for vertical edges and (BlockHeight+1) for horizontal edges. The kernel length is adjusted to be an odd number for the self-dominancy of the filtered pixel.

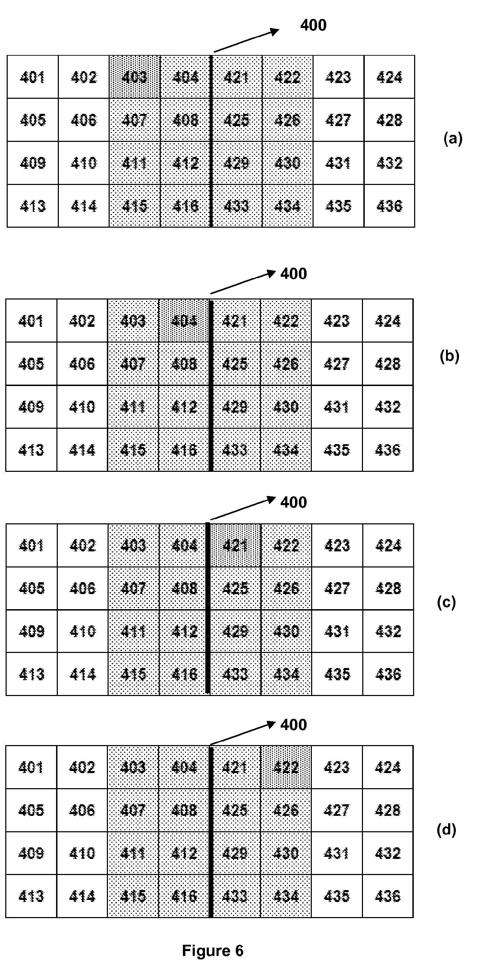

Figure 6 schematically illustrates the one dimensional kernel positions for the filtering of the first row around a vertical edge (400). The two 4x4 blocks of pixels consist of the pixels (401, 402, 403, 404, 405, 406, 407, 408, 409, 410, 411, 412, 413, 414, 415, 416) and (421, 422, 423, 424, 425, 426, 427, 428, 429, 430, 431, 432, 433, 434, 435, 436), respectively. The pixels (403, 404, 421 and 422) are the filtered pixels on the first row, whereas the filtered pixels are labeled with (407, 408, 425 and 426) for the second row, with (411, 412, 429 and 430) for the third row and with (415, 416, 433, 434) in the fourth row for the 4x4 blocks of pixels in Figure 6. The filtering should be applied for the additional rows for block height dimensions greater than 4. The effective pixels for the filtering of a first pixel (403) are pixels (401, 402, 403, 404 and 421), as shown in (a), whereas pixels (402, 403, 404, 421 and 422) are effective for the filtering of a second pixel (404), as illustrated in (b). Similarly, (c) illustrates that pixels (403, 404, 421, 422 and 423) contribute for the filtering of a third pixel (421). Lastly, as depicted in (d), pixels (404, 421, 422, 423 and 424) are effective for the filtering of pixel (422). The effective pixels for the filtering of pixels in other rows are as follows:

- For 407 on Row 2: 405, 406, 407, 408, 425
- For 408 on Row 2: 406, 407, 408, 425, 426
- For 425 on Row 2: 407, 408, 425, 426, 427
- For 426 on Row 2: 408, 425, 426, 427, 428
- For 411 on Row 3: 409, 410, 411, 412, 429
- For 412 on Row 3: 410, 411, 412, 429, 430
- For 429 on Row 3: 411, 412, 429, 430, 431
- For 430 on Row 3: 412, 429, 430, 431, 432
- For 415 on Row 4: 413, 414, 415, 416, 433
- For 416 on Row 4: 414, 415, 416, 433, 434
- For 433 on Row 4: 415, 416, 433, 434, 435
- For 434 on Row 4: 416, 433, 434, 435, 436

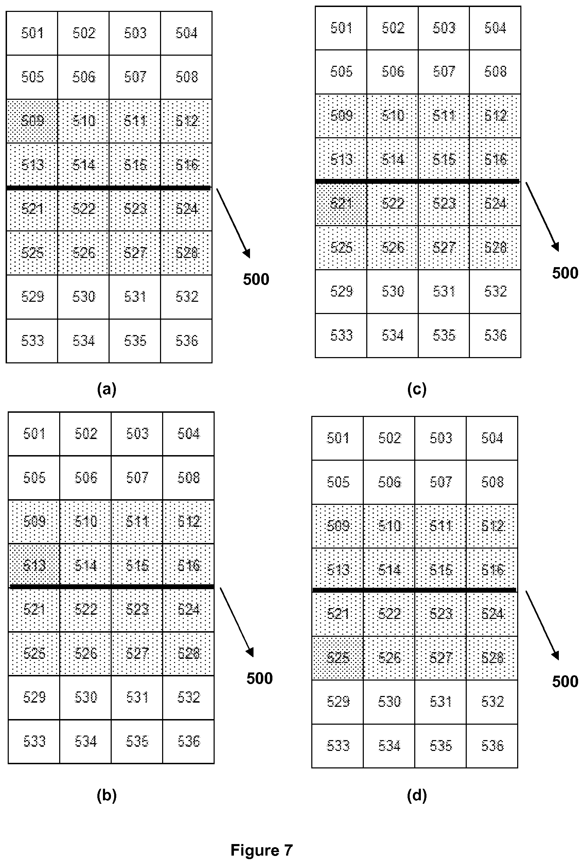

Figure 7 schematically depicts the one dimensional kernel positions for the filtering of the first column around a horizontal edge (500). The two 4x4 blocks of pixels consist of the pixels (501, 502, 503, 504, 505, 506, 507, 508, 509, 510, 511, 512, 513, 514, 515, 516) and (521, 522, 523, 524, 525, 526, 527, 528, 529, 530, 531, 532, 533, 534, 535, 536), respectively. The pixels (509, 513, 521 and 525) are the filtered pixels on the first column, whereas the filtered pixels are labeled with (510, 514, 522, and 526) for the second row, with (511, 515, 523, 527) for the third column and with (512, 516, 524, 528) in the fourth column for the 4x4 blocks of pixels in Figure 7. The filtering should be applied for the additional columns for block width dimensions greater than 4. The effective pixels for the filtering are as follows:

- For 509 on Column 1: 501, 505, 509, 513, 521
- For 513 on Column 1: 505, 509, 513, 521, 525
- For 521 on Column 1: 509, 513, 521, 525, 529
- For 525 on Column 1: 513, 521, 525, 529, 533
- For 510 on Column 2: 502, 506, 510, 514, 522
- For 514 on Column 2: 506, 510, 514, 522, 526
- For 522 on Column 2: 510, 514, 522, 526, 530
- For 526 on Column 2: 514, 522, 526, 530, 534
- For 511 on Column 3: 503, 507, 511, 515, 523
- For 515 on Column 3: 507, 511, 515, 523, 527
- For 523 on Column 3: 511, 515, 523, 527, 531
- For 527 on Column 3: 515, 523, 527, 531, 535
- For 512 on Column 4: 504, 508, 512, 516, 524
- For 516 on Column 4: 508, 512, 516, 524, 528
- For 524 on Column 4: 512, 516, 524, 528, 532
- For 528 on Column 4: 516, 524, 528, 532, 536

The coefficients in the filtering window, and hence, the filter strength is adjusted adaptively according to the difference along the edge between the two blocks. The difference is calculated with one pixel depth on both sides along the edge to be filtered. The edge pixel depth for the edge difference calculation may be set to different values in different implementations. The edge difference is converted to pixel-wise basis via division with the edge length in pixels. The kernel coefficients are calculated as formulized in equation (17).

$$\varphi\left(k\right)=e^{-k^2/\sigma^2} \;\;,\; k=0,\pm1,\pm2,... \tag{17}$$

In equation (17), $\sigma^2$ is the variance of the Gaussian formulation. After all coefficients are calculated, they are normalized to give a summation of 1.

The variance, $\sigma^2$, is set to be equal to the pixel-wise edge difference. Since the center coefficient is always set as 1 before normalization, the relative effectiveness of the other pixels increase with larger pixel-wise edge difference. Hence, stronger filtering is applied along edges with large difference values.

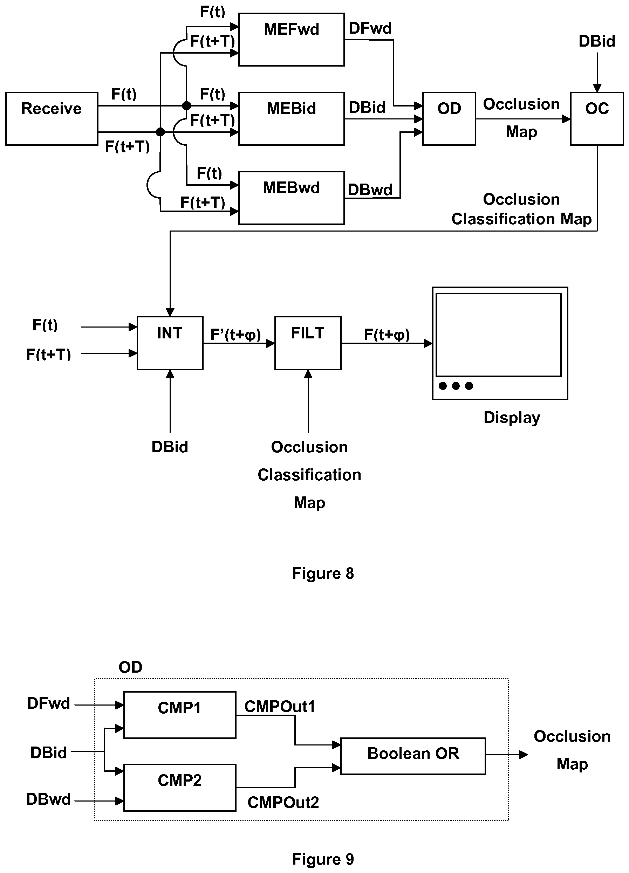

Figure 8 illustrates an apparatus for interpolating a sequence of video frames. As shown, a first frame (*F(t)*) and a second frame (*F(t+T)*) are applied to the motion estimation units (*MEFwd), (MEBid)* and (*MEBwd),* for the estimation of forward, bidirectional and backward motion vector fields. The estimated forward (*DFwd*), bidirectional (*DBid*) and backward (*DBwd*) motion vector fields are then applied to an occlusion detection unit (OD) to generate an occlusion map.

The occlusion detection unit (OD) investigates the estimated forward, bidirectional and backward motion vector fields to identify regions where there are inconsistencies, which are identified as occlusion regions, and regions where there are no inconsistencies, which are identified as non-occluded regions. The generated occlusion map is then processed by an occlusion classifier unit (OC) which classifies the occlusion regions as covered or non-covered. The output of the occlusion classifier unit is an occlusion classification map. The occlusion classification map is fed to an interpolation (INT) module, together with the first frame (*F(t)*) and the second frame (*F(t+T)*), for the generation of an initial output frame (*F'(t+φ)*). The last module of the apparatus is the adaptive filtering (FILT) unit, which receives the initial output frame (*F'(t+φ)*) and the occlusion classification map as input, and interpolates the final output of the system (*F(t+φ)*). The final output frame (*F(t+φ)*) is the frame to be interpolated. The resulting interpolated sequence of frames is supplied to a display device to be displayed at an increased frame rate such as 100 Hz, 120 Hz or 200 Hz.

Figure 9 is a block diagram of an occlusion detector (OD) for use in an apparatus as shown in Figure 8. The occlusion detector (OD) has comparison units, (CMP1, CMP2), which each compare corresponding motion vectors and generate respective binary output signals (CMPOut1, CMPOut2). Specifically, forward motion vectors and bidirectional motion vectors are applied to a first comparator (CMP1) and its binary output signal, (CMPOut1), is set to 1 if the corresponding bidirectional motion vector, $\vec{D}_{bid}$, is inconsistent with the corresponding forward motion vector, $\vec{D}_f$. (CMPOut1) is set to 0 where there is no such inconsistency. Similarly, the backward motion vectors and bidirectional motion vectors are applied to a second comparator (CMP2) and its binary output signal, (CMPOut2), is set to 1 if the corresponding bidirectional motion vector, $\vec{D}_{bid}$, is inconsistent with the corresponding backward motion vector, $\vec{D}_b$, and is set to 0, otherwise. The binary output signals, (CMPOut1) and (CMPOut2) are then applied to a decision logic circuit so that a decision as to whether a particular region of the interpolated frame is occluded or non-occluded can be made. In the embodiment illustrated in Figure 9, the decision is a comparison utilizing a Boolean OR operation.

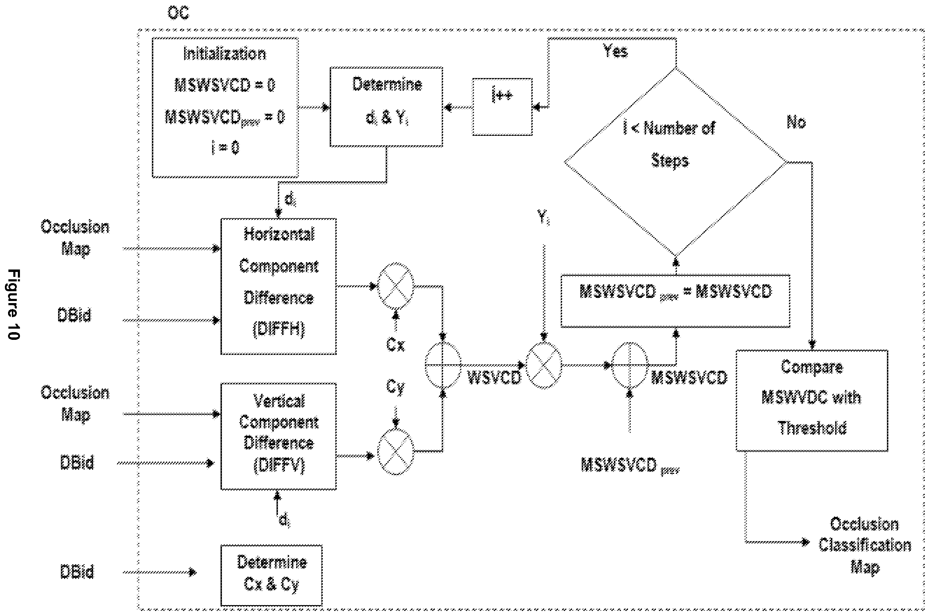

Figure 10 schematically shows a block diagram of the occlusion classification unit (OC) of the apparatus of Figure 8. The units horizontal component difference unit (DIFFH) and vertical component difference unit (DIFFV) compute horizontal and vertical vector component differences, respectively, according to the $d_i$ parameter which is defined in equations (4) and (5), and whose value is determined according to the $i^{th}$ pass in the multipass occlusion classification procedure. The weighted sum vector component differences (WSVCD) is computed with respect to the coefficients, $c_x$ and $c_y$, which are determined according to the spatial characteristics of the particular motion vector under examination. As the next step, multi-step weighted sum of vector component differences (MSWSVCD) is calculated with respect to the coefficient, $\gamma_i$, which is defined in equation (3), and whose value is determined with respect to the $i^{th}$ pass in the multi-step occlusion classification procedure. In the last stage, after the multi-step procedure is completed, multi-step weighted sum of vector component differences (MSWSVCD), which is represented by $\psi_{x,y}$ in equation (3), is compared with respect to a scalar threshold in order to decide the occlusion type of the particular pixel or block of pixels as covered, uncovered, or undecided.

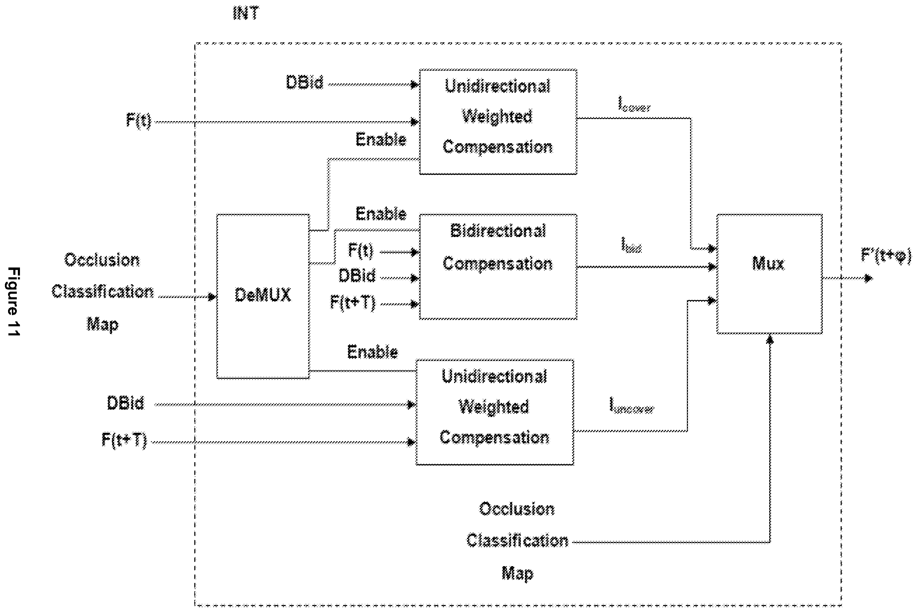

Figure 11 is a block diagram of a frame interpolation unit (INT) of the apparatus shown in Figure 8. The de-multiplexer (DeMux) activates the corresponding compensation unit while de-activating the others, according to the occlusion classification map. The de-multiplexer (DeMux) sets the corresponding enable signal to 1, while keeping the other enable signals at 0. Compensation is performed in only the enabled unit among bidirectional compensation, unidirectional covered region compensation and unidirectional uncovered region compensation. The output value for the disabled modules can be set to an appropriate value. At the final stage of the interpolation unit (INT), the corresponding compensation result is selected by the multiplexer (Mux), according to the occlusion classification map.

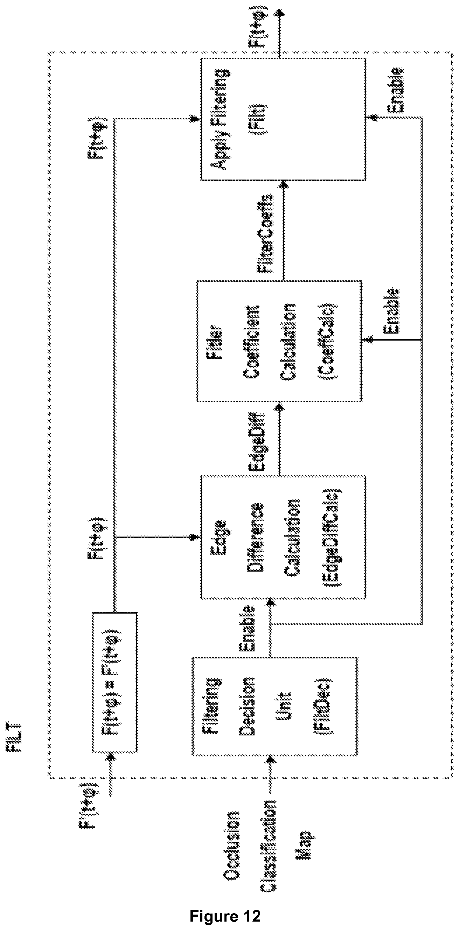

Figure 12 depicts a block diagram of an adaptive de-blocking filtering unit (FILT) as used in the apparatus of Figure 8. The filtering decision unit (FiltDec) decides whether there is need for de-blocking filtering between two neighboring blocks, according to the occlusion classification map, and generates enabling signals (Enable) for other units. The pixel-wise edge difference between the neighboring blocks is calculated in edge difference calculation unit (Edge-DiffCalc) and the filter coefficients are calculated with respect to the pixel-wise edge difference in filter coefficient calculation unit (CoeffCalc). At the last stage the filter kernel (Filt) is applied to the image frame.

The process aims first at localizing pixel-wise or block-wise occlusion regions in the frame to be interpolated, and classifying the detected occlusion regions as covered and uncovered. The interpolation of the new frame is performed with respect to the detected covered and uncovered regions. In the last stage, for block-wise implementations, the algorithm proposes an adaptive de-blocking filtering for reducing the possible visual artifacts between neighboring blocks of pixels.

It will be appreciated that the processes described herein may be implemented by software, firmware or hardware, or some combination thereof. Furthermore, variations in, or modifications to, the embodiments as described and illustrated may be made within the scope of the appended claims.

**Claims**

1. A method of frame interpolation for a sequence of video frames comprising locating an interpolated frame (102) temporally between a first frame and a second frame (100,104) of said sequence, said method comprising;

   - investigating a plurality of regions of said interpolated frame for occlusion regions on said interpolated frame, utilizing forward, bidirectional and backward motion vectors estimated for each of said first, interpolated, and second frames, and comparing at least one bidirectional motion vector with either a forward or a backward motion vector;
   - identifying regions at which inconsistencies are found by said comparison as occlusion regions, and identifying other regions with no inconsistencies as non-occluded regions;
   - classifying said identified occlusion regions as covered, or uncovered; and
   - interpolating regions identified as non-occluded utilizing information from both of said first frame and said second frame;
   - interpolating said occlusion regions classified as covered by utilizing information from said first frame; and
   - interpolating occlusion regions classified as uncovered, by utilizing information said second frame

   wherein said covered occlusion regions and said uncovered occlusion regions are interpolated using weighted summation of unidirectional motion compensated responses of neighboring vectors, **characterized in that**, de-blocking filtering is applied along the block edge between neighboring blocks of pixels , if one of the blocks is occluded and the other is non-occluded or both of the blocks are occluded with different types of occlusion as cover or uncover.

2. A method according to Claim 1, wherein if an occlusion region is classified as covered, interpolation is performed by the following formulas;

$$\cdot\ R_{cover}\left(\vec{X},\vec{D}_{bid},t+\varphi\right) = F\left(\vec{X}-\left(\frac{\varphi}{T}\right)\cdot\vec{D}_{bid},t\right)$$

$$\cdot\ I_{cover}\left(\vec{X},t+\varphi\right) = \frac{\sum\limits_{i=0}^{N-1} w_i \cdot R_{cover}\left(\vec{X},\vec{D}_i,t+\varphi\right)}{\sum\limits_{i=0}^{N-1} w_i}$$

3. A method according to Claim 1, wherein if an occlusion region is classified as uncovered, interpolation is performed by the following formulas;

$$\cdot\ R_{uncover}\left(\vec{X},\vec{D}_{bid},t+\varphi\right) = F\left(\vec{X}+\left(1-\frac{\varphi}{T}\right)\cdot\vec{D}_{bid},t+T\right)$$

$$\cdot\ I_{uncover}\left(\vec{X},t+\varphi\right) = \frac{\sum\limits_{i=0}^{N-1} w_i \cdot R_{uncover}\left(\vec{X},\vec{D}_i,t+\varphi\right)}{\sum\limits_{i=0}^{N-1} w_i}$$

**Patentansprüche**

1. Verfahren der Bildinterpolation für eine Sequenz von Videobildern mit einem inter-polierten Bild (102), das zeitlich zwischen einem ersten Bild und einem zweiten Bild (100, 104) der Sequenz liegt, wobei bei dem Verfahren:

   - eine Mehrzahl von Regionen des interpolierten Bildes nach Okklusionsregionen in dem interpolierten Bild abgesucht wird, wobei Vorwärts-, Bidirektional- und Rückwärtsbewegungsvektoren verwendet werden, die für jedes von dem ersten, dem interpolierten und dem zweiten Bild geschätzt werden, und wenigstens ein Bidirektionalbewegungsvektor mit entweder einem Vorwärts- oder einem Rückwärtsbewegungsvektor verglichen wird,
   - Regionen, bei denen durch den Vergleich Inkonsistenzen gefunden werden, als Okklusionsregionen identifiziert werden und andere Regionen ohne Inkonsistenzen als Nicht-Okklusionsregionen identifiziert werden,
   - die identifizierten Okklusionsregionen als abgedeckt oder nicht abgedeckt klassifiziert werden, und
   - Regionen, die als Nicht-Okklusionsregionen identifiziert sind, unter Verwendung von Informationen aus dem ersten Bild und dem zweiten Bild interpoliert werden,
   - Okklusionsregionen, die als abgedeckt klassifiziert sind, durch Verwendung von Informationen aus dem ersten Bild interpoliert werden, und
   - Okklusionsregionen, die als nicht abgedeckt klassifiziert sind, durch Verwendung von Informationen aus dem zweiten Bild interpoliert werden,

   wobei die abgedeckten Okklusionsregionen und die nicht abgedeckten Okklusionsregionen durch Verwendung von gewichteter Summierung von unidirektional bewegungskompensierten Antworten benachbarter Vektoren interpoliert werden, **dadurch gekennzeichnet, dass**
   eine Deblocking-Filterung entlang des Blockrandes zwischen benachbarten Blöcken von Pixeln angewendet wird, wenn einer der Blöcke okkludiert und der andere nicht okkludiert ist oder beide Blöcke mit unterschiedlichen Typen der Okklusion wie abgedeckt oder nicht abgedeckt okkludiert sind.

2. Verfahren nach Anspruch 1, wobei, wenn eine Okklusionsregion als abgedeckt klassifiziert ist, die Interpolation mit den folgenden Formeln durchgeführt wird:

$$\cdot\ R_{cover}\left(\overline{X},\overline{D}_{bid},t+\varphi\right)=F\left(\overline{X}-\left(\frac{\varphi}{T}\right)\cdot\overline{D}_{bid},t\right)$$

$$\cdot\ I_{cover}\left(\overline{X},t+\varphi\right)=\frac{\sum_{i=0}^{N-1}w_i\cdot R_{cover}\left(\overline{X},\overline{D}_i,t+\varphi\right)}{\sum_{i=0}^{N-1}w_i}\ .$$

3. Verfahren nach Anspruch 1, wobei, wenn eine Okklusionsregion als nicht abgedeckt klassifiziert ist, die Interpolation mit den folgenden Formeln durchgeführt wird:

$$\cdot\ R_{uncover}\left(\overline{X},\overline{D}_{bid},t+\varphi\right)=F\left(\overline{X}+\left(1-\frac{\varphi}{T}\right)\cdot\overline{D}_{bid},t+T\right)$$

$$\cdot\ I_{uncover}\left(\overline{X},t+\varphi\right)=\frac{\sum_{i=0}^{N-1}w_i\cdot R_{uncover}\left(\overline{X},\overline{D}_i,t+\varphi\right)}{\sum_{i=0}^{N-1}w_i}\ .$$

**Revendications**

1. Procédé d'interpolation d'image pour une séquence d'images vidéo comprenant la localisation d'une image interpolée (102) temporairement entre une première image et une seconde image (100, 104) de ladite séquence, ledit procédé comprenant :

   - l'examen d'une pluralité de régions de ladite image interpolée pour des régions d'occlusion sur ladite image interpolée, en utilisant des vecteurs mouvements avant, bidirectionnel et arrière estimés pour chacune desdites première image, image interpolée, et seconde image, et la comparaison d'au moins un vecteur mouvement bidirectionnel soit à un vecteur mouvement avant, soit à un vecteur mouvement arrière ;
- l'identification des régions dans lesquelles se trouvent des incohérences par ladite comparaison en tant que régions d'occlusion, et l'identification d'autres régions ne présentant aucune incohérence en tant que régions non occluses ;
- le classement desdites régions d'occlusion identifiées comme couvertes, ou non couvertes ; et
- l'interpolation des régions identifiées comme non occluses par l'utilisation des informations provenant à la fois de ladite première image et de ladite seconde image ;
- l'interpolation desdites régions d'occlusion classées comme couvertes par l'utilisation des informations provenant de ladite première image ; et
- l'interpolation des régions d'occlusion classées comme non couvertes, par l'utilisation des informations de ladite seconde image

dans lequel lesdites régions d'occlusion couvertes et lesdites régions d'occlusion non couvertes sont interpolées en utilisant la sommation pondérée des réponses compensées en mouvement unidirectionnel de vecteurs voisins, **caractérisé en ce que**,

un filtrage de dégroupage est appliqué le long du bord de bloc entre des blocs voisins de pixels, si un des blocs est occlus et l'autre n'est pas occlus ou les deux blocs sont occlus avec des types différents d'occlusion couverte ou non couverte.

2. Procédé selon la revendication 1, dans lequel si une région d'occlusion est classée comme couverte, l'interpolation est réalisée grâce aux formules suivantes ;

$$\cdot R_{cover}\left(\overrightarrow{X}, \overrightarrow{D}_{bid}, t+\varphi\right) = F\left(\overrightarrow{X} - \left(\frac{\varphi}{T}\right)\cdot \overrightarrow{D}_{bid}, t\right)$$

$$\cdot I_{cover}\left(\overrightarrow{X}, t+\varphi\right) = \frac{\sum_{i=0}^{N-1} w_i \cdot R_{cover}\left(\overrightarrow{X}, \overrightarrow{D}_i, t+\varphi\right)}{\sum_{i=0}^{N-1} w_i}$$

3. Procédé selon la revendication 1, dans lequel si une région d'occlusion est classée comme non couverte, l'interpolation est réalisée grâce aux formules suivantes ;

$$\cdot R_{uncover}\left(\overrightarrow{X}, \overrightarrow{D}_{bid}, t+\varphi\right) = F\left(\overrightarrow{X} + \left(1 - \frac{\varphi}{T}\right)\cdot \overrightarrow{D}_{bid}, t+T\right)$$

$$\cdot I_{uncover}\left(\overrightarrow{X}, t+\varphi\right) = \frac{\sum_{i=0}^{N-1} w_i \cdot R_{uncover}\left(\overrightarrow{X}, \overrightarrow{D}_i, t+\varphi\right)}{\sum_{i=0}^{N-1} w_i}$$

Figure 1

Figure 2

| | | | | |
|---|---|---|---|---|
| | | | | |
| | 301 | 302 | 303 | |
| | 304 | 305 | 306 | |
| | 307 | 308 | 309 | |
| | | | | |

**Figure 3**

**400**

| 401 | 402 | 403 | 404 | 421 | 422 | 423 | 424 |
|---|---|---|---|---|---|---|---|
| 405 | 406 | 407 | 408 | 425 | 426 | 427 | 428 |
| 409 | 410 | 411 | 412 | 429 | 430 | 431 | 432 |
| 413 | 414 | 415 | 416 | 433 | 434 | 435 | 436 |

**Figure 4**

| | | | |
|---|---|---|---|
| 501 | 502 | 503 | 504 |
| 505 | 506 | 507 | 508 |
| 509 | 510 | 511 | 512 |
| 513 | 514 | 515 | 516 |
| 521 | 522 | 523 | 524 |
| 525 | 526 | 527 | 528 |
| 529 | 530 | 531 | 532 |
| 533 | 534 | 535 | 536 |

**500**

**Figure 5**

Figure 6

Figure 7

Figure 8

Figure 9

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6219436 B
- US 6487313 B

- WO 9704599 A

**Non-patent literature cited in the description**

- **ZHANG YI-XIONG et al.** *Frame rate up-conversion using multiresolution critical point filters with occlusion refinement*